# EUROPÄISCHE PATENTSCHRIFT

(11) **EP 0 693 415 B1**
(45) Veröffentlichungstag und Bekanntmachung des Hinweises auf die Patenterteilung: **19.11.1997**
(21) Anmeldenummer: 95110590.7
(22) Anmeldetag: 07.07.1995
(51) Int. Cl.: B62D 53/08

(54) **Sicherung für einen Königszapfen eines freistehenden Sattelaufliegers für Zugfahrzeuge**
Anti coupling device for a king pin of a self supporting semitrailer for tractors
Dispositif antivol pour la cheville ouvrière d'une semi-remorque detanchée pour tracteurs

(30) Priorität: 20.07.1994 DE 4425513
(43) Veröffentlichungstag der Anmeldung: 24.01.1996
(73) Patentinhaber: Diehl Remscheid GmbH & Co., D-42857 Remscheid (DE)
(72) Erfinder: de Keijzer, Cornelius Jakobus, NL-5802 EX Venray (NL); Poten, Peter-Randolf, D-53947 Nettersheim (DE); Steffens, Karl, D-53949 Dahlem (DE)
(74) Vertreter: Hofmann, Gerhard, Dipl.-Ing. Patentassessor

(56) Entgegenhaltungen:
- US-A- 3 798 938
- US-A- 4 132 093

## Beschreibung

Die Erfindung bezieht sich auf eine Sicherung für einen Königszapfen eines freistehenden Sattelaufliegers für Zugfahrzeuge nach dem Oberbegriff des Anspruchs 1.

Aus der DE 41 04 796 C1 ist eine derartige Sicherung für einen Königszapfen eines freistehenden Sattelaufliegers für Zugfahrzeuge bekannt. Eine unbefugte Benutzung eines geparkten Sattelaufliegers wird durch die Sicherung dadurch verhindert, daß der Königszapfen einer Kupplungseinrichtung mit einem, am Königszapfen verriegelbaren Gummi-Metallteil versehen wird. Das Gummi-Metallteil widersteht mechanischen Werkzeugen und ist auch temperaturunempfindlich. Bei Kenntnis der sicherheitsrelevanten Bereiche ist es jedoch mittels Bohrmaschinen möglich, den in Schließstellung stehenden Riegel zu zerstören. Damit erlischt die Sicherungsfunktion des Gummi-Metallteils.

Aufgabe der Erfindung ist es daher, einen Bohrschutz für den sicherheitsrelevanten Bereich des Riegels zu schaffen.

Die Erfindung löst diese Aufgabe entsprechend den kennzeichnenden Merkmalen des Anspruches 1.

Vorteilhafte Weiterbildungen der Erfindung sind den Unteransprüchen zu entnehmen.

Zwei aus einem Hartwerkstoff bestehende Platten decken den sicherheitsrelevanten Bereich des Riegelbolzens ab. Bis zu den Platten vorgedrungene Bohrer stoßen auf Widerstand und haben keine Möglichkeit, die Platten anzubohren.

Ein Ausführungsbeispiel der Erfindung ist zu der Zeichnung näher beschrieben.

Es zeigt:
- Fig. 1: die Handhabung der Sicherung am Königszapfen,
- Fig. 2: in perspektivischer Ansicht die Sicherung nach Fig. 1 in Pfeilrichtung II im Teilschnitt,
- Fig. 3 bis 5: Schnittdarstellungen der Sicherung nach Fig. 2 entsprechend den dort angegebenen Schnittlinien, wobei Fig. 4 eine schematische Darstellung ist, und
- Fig. 6: die Sicherung nach Fig. 2 ohne Schloß und Gummierung.

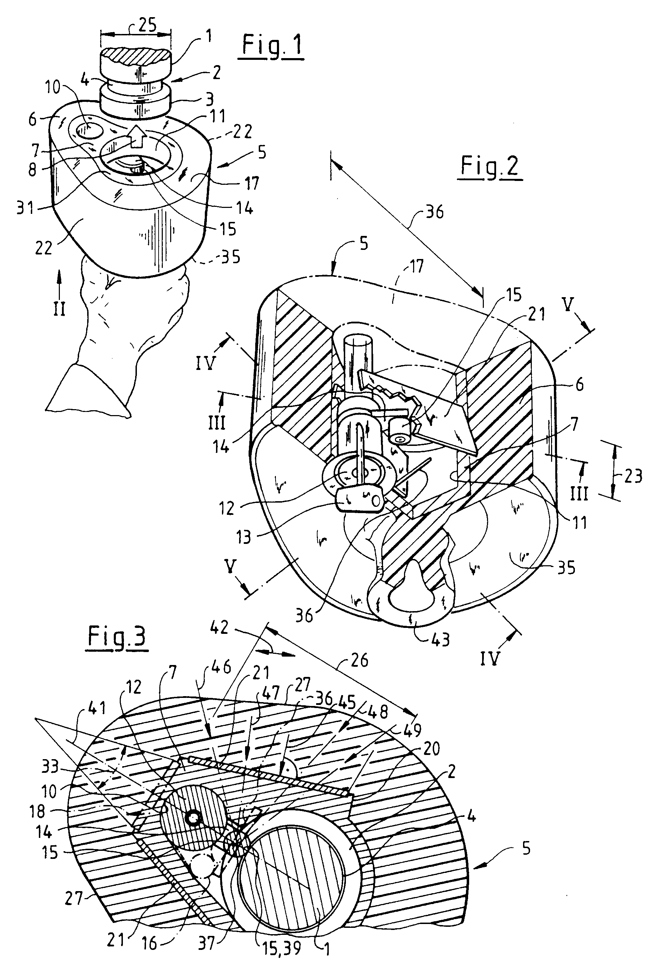

Entsprechend Fig. 1 wird ein Königszapfen 1 eines nicht dargestellten, geparkten Sattelaufliegers mit der Sicherung 5 gegen unbefugtes Benutzen blockiert.

Der Königszapfen 1 ist mit einer Ringnut 2 versehen und weist stirnseitig einen Bund 3 auf.

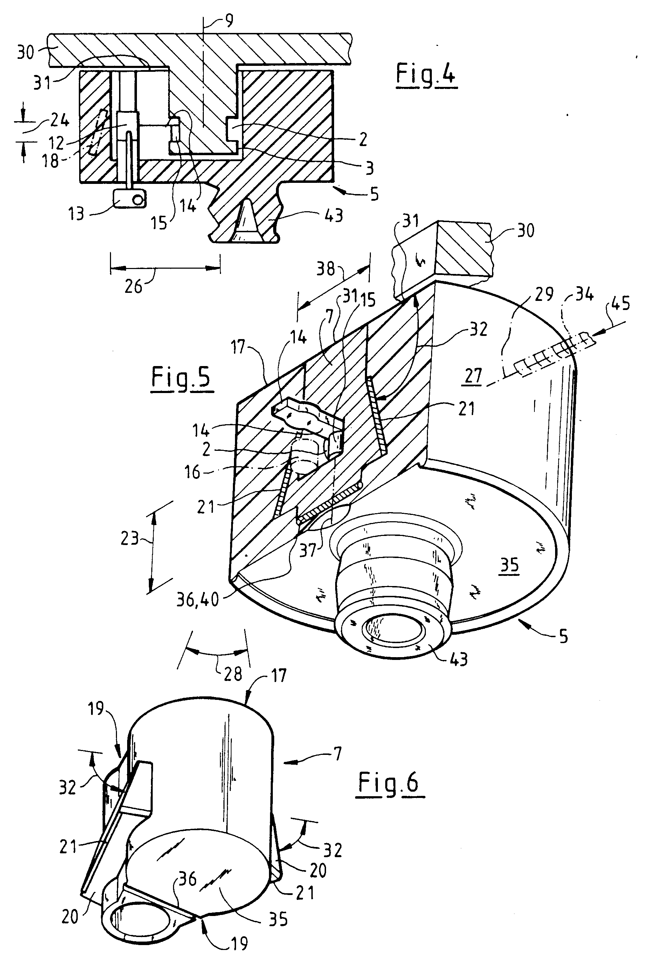

Die Sicherung 5 besteht aus einem Gummi-Metallteil 6, 7, wobei das Metallteil 7 entsprechend den Fig. 2 und 4 festhaftend mit dem Gummiteil 6 verbunden ist.

In dem brillenförmig ausgebildeten Metallteil 7 sind zwei Bohrungen 10, 11 zur Aufnahme eines Schlosses 12 und des Königszapfens 1 angeordnet.

Zur Verriegelung des Königszapfens 1 wird gemäß Fig. 1 die Sicherung 5 manuell in Pfeilrichtung 8 über den Königszapfen 1 geschoben und über das Schloß 12 gemäß Fig. 4 am Königszapfen 1 verriegelt, wie nachstehend noch näher beschrieben ist.

Gemäß den Fig. 2 bis 4 ist ein aufbohrsicheres Schloß 12 in der Bohrung 10 befestigt. Mittels eines Schlüssels 13 ist ein Riegel 14 mit einem Riegelzylinder 15 aus einer strichpunktiert gezeichneten Freistellung 16 (Fig. 3, 5) in die aus den Fig. 3 bis 5 ersichtliche Riegelstellung schwenkbar.

Das Metallteil 7 besteht aus Aluminium und ist bis auf seine Unterseite 31 von einem Gummimantel 27 umgeben. An seinen Längsseiten 19 (Fig. 6) sind zwei Lagerkörper 20 angeformt. Die Lagerkörper 20 sind mit, aus einem Hartwerkstoff bestehenden seitlichen Platten 21 fest verbunden. Die Platten 21 bestehen entweder aus gehärtetem Stahl oder einem anderen anbohrsicheren Werkstoff, wie Keramik.

Äquivalent kann die Bohrung 10 durch eine stirnseitige Platte 18 (Fig. 3, 4) geschützt sein. Die Platte 18 bildet mit einer Achse 9 einen Winkel von etwa 20°. Die Verlängerung der Platte 18 schneidet die Achse 9 im Bereich des Sattelaufliegers.

Die Platten 21 erfassen zu beiden Seiten der Sicherung 5 sicherheitsrelevante Bereiche 22 (Fig. 1). Deren Breite 23 (Fig. 2, 4) entspricht etwa der 3-fachen Höhe 24 von Riegel 14 und Riegelzylinder 15 gemäß Fig. 4. Die Länge 26 (Fig. 3) dieser Bereiche 22 erfaßt das gesamte Schloß 12 und erstreckt sich über ca. 60% des Durchmessers 25 des Königszapfens 1.

Aus den Fig. 2, 5 und 6 ist ersichtlich, daß die Platten 21 zu einer Sattelplatte 30 eines Sattelaufliegers bzw. zu einer Unterfläche 17 der Sicherung 5 geneigt angeordnet sind. Nach Fig. 5 liegt der spitze Winkel 32 zwischen Platte 21 und der Unterseite 17 und beträgt 60° bis 80°, vorzugsweise 70°.

Ein weiterer Bohrschutz für den Riegel 14 und den Riegelzylinder 15 liegt im Bereich der Oberseite 35 der Sicherung 5 vor. Dieser Bohrschutz besteht aus einem Nagel 36 aus Hartwerkstoff oder aus einem gehährteten Stahl. Der Nagel 36 (Fig. 2, 3, 5) ist mit dem Metallteil 7 fest verbunden. Er liegt etwa rechtwinklig zu den Platten 21 und zwar mittig zur Verlängerung der Symmetrieachse 37 des in Schließstellung stehenden Riegelzylinders 15. Die Länge 38 des Nagels 36 entspricht etwa dem 3-fachen Durchmesser 39 (Fig. 3) des Riegelzylinders 15. Der Durchmesser 40 des Nagels 36 beträgt etwa 1/3 des Durchmessers 39 (Fig. 3) des Riegelzylinders 15. Die Anordnung bzw. Lage des Nagels 36 ist rechtwinklig und symmetrisch zur Hauptsymmetrieachse 41 der Sicherung 5, siehe Fig. 3.

Zur leichteren Handhabung der Sicherung 5 ist an der Oberseite 35 der Sicherung ein Gummihandgriff 43 angeformt.

Zur Montage der Sicherung 5 an dem Königszapfen 1 wird gemäß Fig. 1 die Sicherung 5 in Pfeilrichtung 8 über den Königszapfen 1 geschoben und zwar bis zum Anschlag an die Sattelplatte 30. Anschließend erfolgt die Verriegelung der Sicherung 5 über den Schlüssel 13, (Fig. 4) wobei gemäß den Fig. 2 bis 5 der Riegelzylinder 15 in die Ringnut 2 einfährt und an der Wand 4 der Ringnut 2 anliegt, siehe Fig. 3. Damit befindet sich der Riegelzylinder 15 in der Hauptsymmetrieachse 41 der Sicherung 5.
Nach dem Loslassen des Gummihandgriffes 43 bewegt sich die Sicherung 5 entgegen der Pfeilrichtung 8 soweit nach unten, bis der Riegelzylinder 15 am Bund 3 anstößt. Nach dem Entfernen des Schlüssels 13 ist die Sicherung 5 ordnungsgemäß fixiert. Die korrekte Demontage der Sicherung 5 erfolgt in umgekehrter Reihenfolge.
Bei Anbohrversuchen sowohl von der Oberseite 35 als auch im Bereich der Seitenbereiche 22 wird ein erheblicher Bohrwiderstand bereits durch das Gummiteil 6 bewirkt. Der Nagel 36 als auch die winklig angeordneten Platten 21 stoppen die Bohrversuche sicher. Die Neigung der Platten 21 in Richtung des Gummimantels 27 und zwar aufgrund eines Keilwinkels 28 von 30° bis 50°, vorzugsweise 40°, erhöht bei einem Anbohrversuch in einer parallelen Ebene 29 (Fig. 5) zur Unterseite 17 die Dicke der Platte 21; außerdem gleitet ein Bohrer 34 in Pfeilrichtung 45 immer in Richtung der Unterseite 17 ab und kann daher nicht greifen. Auch Versuche, die Platten 21 anzukörnen schlagen daher fehl.

Die nicht bezeichnete Scheitelebene des Keilwinkels 28 liegt etwa in der Verlängerung des Königszapfens 1 und zwar in Pfeilrichtung 8.

Aufgrund eines weiteren Keilwinkels 33 (Fig. 3) der Platten 21 bleiben Anbohrversuche in Richtung der Pfeile 46, 47, 48 und 49 erfolglos, da ein Bohrer zusätzlich in den Richtungen des Pfeiles 42 seitlich abrutscht. Bei dem Anbohrversuch in Pfeilrichtung 45, also rechtwinklig zu der Platte 21 (Fig. 3) rutscht ein Bohrer nicht seitlich sondern in Richtung der Unterseite 17 ab. Also auch in diesem seltenen Fall ist ein Anbohrversuch erfolglos.

## Patentansprüche

1. Sicherung (5) für einen Königszapfen (1) eines freistehenden Sattelaufliegers für Zugfahrzeuge gegen unbefugte Benutzung mit einer, über den Königszapfen schieb- und abschließbaren Sicherung,
wobei die Sicherung aus einer metallischen Hülse, einem mit der Hülse umfangsseitig fest verbundenen, elastischen Gummikörper (6) und aus einem Schloß (12) besteht, und
wobei ein Riegelzylinder (15) des Schlosses (12) in eine Ringnut (2) des Königszapfens (1) eingreift,
dadurch gekennzeichnet,
daß in den frei zugänglichen Seiten (22, 23, 26) der Sicherung (5) im Schließbereich des Schlosses (13) wenigstens zwei aus einem Hartwerkstoff bestehende Platten (18, 21) in der Sicherung (5) angeordnet sind.

2. Sicherung nach Anspruch 1,
dadurch gekennzeichnet,
daß zwei Platten (21) zwischen sich einen Keilwinkel (Fig. 3, 28) von 30° bis 50°, vorzugsweise 40° einschließen, wobei der Scheitelpunkt des Keilwinkels (28) etwa im Bereich des Königszapfens (1) liegt und daß in dem Keilwinkel das Schloß (13) mit dem Riegel (14), dem Riegelzylinder (15) und etwa 60% des Längsquerschnittes des Königzapfens (1) liegen.

3. Sicherung nach den Ansprüchen 1 und 2,
dadurch gekennzeichnet,
daß die Platten (21) quer zu dem Schloß (13) und einer Bohrung (11) zur Aufnahme des Königszapfens (1) in einem Metallteil (7) liegen.

4. Sicherung nach Anspruch 3,
dadurch gekennzeichnet,
daß die Platten (21) eine zweifache Keilform aufweisen, in dem die Platten (21) in ihrer Längsrichtung sowohl die Bohrung (10) zur Aufnahme des Schlosses (13) als auch die demgegenüber größere Bohrung (11) schützen und die Platten (21) einen Keilwinkel (33) von etwa 40° bilden.

5. Sicherung nach Anspruch 1,
dadurch gekennzeichnet,
daß die Platten (18, 21) mit einem Metallteil (7) fest verbunden sind,
das Metallteil (7) die Bohrungen (10, 11) für das Schloß (12) und den Königszapfen (1) aufweist, und das Metallteil (7) bis auf seine Unterseite (31) vollständig mit Gummiwänden (27) umgeben ist.

6. Sicherung nach Anspruch 1,
dadurch gekennzeichnet,
daß zwischen dem Schloß (12) und dem Königszapfen (1) in der Oberseite (35) des Metallteils (7) ein Zylinder bzw. Nagel (36) in der Verlängerung der Symmetrieachse (37) des Riegelzylinders (15) liegt und zwar rechtwinklig und symmetrisch zur Hauptsymmetrieachse (41) der Sicherung (5).

7. Sicherung nach Anspruch 5,
dadurch gekennzeichnet,
daß das Metallteil (7) aufgrund der Bohrungen (10, 11) brillenförmig ausgebildet ist.

## Claims

1. Safety device (5) against unauthorized use for a king pin (1) of a detached semi-trailer designed for use with towing vehicles, with a safety device which can be pushed over the king pin and locked,
the safety device consisting of a metal sleeve, an elastic rubber body (6) firmly connected with the circumference of the sleeve and a lock (12), and a bolt cylinder (15) of the lock (12) engaging in an annular groove (2) of the king pin (1),
characterized in that
at the freely accessible sides (22, 23, 26) of the safety device (5) in the closing area of the lock (13) at least two plates (18, 21) made of a hard material are provided in the safety device (5).

2. Safety device according to Claim 1,
characterized in that
two plates (21) between them enclose a wedge angle (Fig. 3, 28) of 30° to 50°, preferably 40°, the vertex of the wedge angle (28) lying roughly in the region of the king pin (1), and
in that the lock (13) with the bolt (14), the bolt cylinder (15) and roughly 60% of the longitudinal cross-section of the king pin lie in the wedge angle.

3. Safety device according to Claims 1 and 2,
characterized in that
the plates (21) lie at an angle to the lock (13) and a bore (11) for accommodating the king pin (1) in a metal component (7).

4. Safety device according to Claim 3,
characterized in that
the plates (21) have a double wedge shape, in which the plates (21) in their longitudinal direction protect both the bore (10) for accommodating the lock (13) and the relatively larger bore (11) and the plates (21) form a wedge angle (33) of approx. 40°.

5. Safety device according to Claim 1,
characterized in that
the plates (18, 21) are firmly connected with a metal component (7),
the metal component (7) has the bores (10, 11) for the lock (12) and the king pin (1), and the metal component (7) is completely surrounded with rubber walls (27) as far as its underside (31).

6. Safety device according to Claim 1,
characterized in that,
between the lock (12) and the king pin (1) in the upper side (35) of the metal component (7), a cylinder or nail (36) lies in the extension of the axis of symmetry (37) of the bolt cylinder (15), that is to say at right angles and symmetrical to the principal axis of symmetry (41) of the safety device (5).

7. Safety device according to Claim 5,
characterized in that
the metal component (7), by reason of the bores (10, 11), is in the shape of a pair of spectacles.

## Revendications

1. Dispositif de sécurité (5) pour un axe-pivot (1) d'une semi-remorque libre pour véhicules tracteurs, contre une utilisation non autorisée, comportant un dispositif de sécurité pouvant être enfilé sur l'axe-pivot et fermé, le dispositif de sécurité étant constitué d'une douille métallique, d'un corps en caoutchouc (6) élastique, solidaire périphériquement de la douille et d'une serrure (12), et un cylindre de verrouillage (15) de la serrure (12) s'engageant dans une rainure annulaire (2) de l'axe-pivot (1), caractérisé en ce que dans les côtés (22, 23, 26) librement accessibles du dispositif de sécurité (5), au moins deux plaques (18, 21) en matériau dur sont placées dans le dispositif de sécurité (5), dans la zone de fermeture de la serrure (13).

2. Dispositif de sécurité selon la revendication 1, caractérisé en ce que deux plaques (21) forment entre elles un angle aigu (fig. 3, 28) de 30° à 50°, de préférence égal à 40°, le point de sommet de l'angle aigu (28) se situant à peu près dans la région de l'axe-pivot (1) et en ce que dans l'angle aigu se trouvent la serrure (13) avec le verrou (14), le cylindre de verrouillage (15) et à peu près 60 % de la section transversale longitudinale de l'axe-pivot (1).

3. Dispositif de sécurité selon les revendications 1 et 2, caractérisé en ce que les plaques (21) sont transversales à la serrure (13) et à un perçage (11) destiné à recevoir l'axe-pivot (1) dans une pièce métallique (7).

4. Dispositif de sécurité selon la revendication 3, caractérisé en ce que les plaques (21) présentent une double forme en coin, en ce que les plaques (21) protègent dans leur direction longitudinale aussi bien le perçage (10) destiné à recevoir la serrure (13) que le perçage (11) plus grand que le premier et les plaques (21) forment un angle aigu (33) d'environ 40°.

5. Dispositif de sécurité selon la revendication 1, caractérisé en ce que les plaques (18, 21) sont solidaires d'une pièce métallique (7), la pièce métallique (7) présente les perçages (10, 11) pour la serrure (12) et l'axe-pivot (1), et la pièce métallique (7) est totalement entourée de parois en caoutchouc (27), à l'exception de sa face inférieure (31).

6. Dispositif de sécurité selon la revendication 1, caractérisé en ce qu'entre la serrure (12) et l'axepivot (1), dans la face supérieure (35) de la pièce métallique (7), se trouve un cylindre ou aiguille (36), dans le prolongement de l'axe de symétrie (37) du cylindre de verrouillage (15), et ce à angle droit et symétriquement par rapport à l'axe de symétrie principal (41) du dispositif de sécurité (5).

7. Dispositif de sécurité selon la revendication 5, caractérisé en ce que la pièce métallique (7) est en forme de lunettes, en raison des perçages (10, 11).
